# FASCICULE DE BREVET EUROPEEN

(11) **EP 2 984 147 B1**
(45) Date de publication et mention de la délivrance du brevet: **16.11.2022**
(21) Numéro de dépôt: 14716817.3
(22) Date de dépôt: 10.04.2014
(51) Int. Cl.: C09K 8/584, C09K 8/588

(54) **FLUIDES D'EXTRACTION A BASE DE POLYMERES ASSOCIATIFS ET DE TENSIOACTIFS LABILES**
EXTRAKTIONSFLÜSSIGKEITEN AUF BASIS VON ASSOZIATIVEN POLYMEREN UND LABILEN TENSIDEN
EXTRACTION FLUIDS BASED ON ASSOCIATIVE POLYMERS AND ON LABILE SURFACTANTS

(30) Priorité: 11.04.2013 FR 1300865
(43) Date de publication de la demande: 17.02.2016
(73) Titulaire: RHODIA OPERATIONS, 69003 Lyon (FR)
(72) Inventeur: CADIX, Arnaud, F-93400 Saint Ouen (FR); WILSON, David James, F-60580 Coye La Foret (FR)
(74) Mandataire: Osha Liang
(86) Numéro de dépôt international: PCT/EP2014/057286
(87) Numéro de publication internationale: WO 2014/167059

(56) Documents cités:
- FR-A1- 2 967 686
- GB-A- 2 383 355
- ZHUOYAN ZHU ,OUYANG JIAN,SABRINA PAILLET ET AL: "hydrophobically modified associating polyacrylamide (HPAM) synthesized by micellar copolymerisation at high monomer concentration", EUROPEAN POLYMER JOURNAL, vol. 43, mars 2007 (2007-03), pages 824-834, XP002719169, DOI: 10.1016/j.eurpolymj.2006.12.016

## Description

La présente invention a trait au domaine de l'extraction pétrolière. Elle concerne plus spécifiquement l'amélioration du taux de récupération au sein des réservoirs hydrocarbonés.

Alors qu'au début de l'exploitation d'un gisement, la pression naturelle des hydrocarbures au sein du réservoir suffit en général à assurer leur déplacement vers les puits de production pendant la phase dite de récupération primaire, cette pression naturelle décroît au cours de l'exploitation et il devient par la suite nécessaire de mettre en œuvre des méthodes de récupération plus actives. Dans un premier temps, on introduit dans le réservoir, via des puits injecteurs, une phase aqueuse, qui, lorsqu'elle entre en contact avec les hydrocarbures favorise leur déplacement vers les puits de production. L'introduction d'eau uniquement ne permet cependant qu'une extraction très partielle des hydrocarbures.

On connaît différentes techniques permettant de récupérer des hydrocarbures qu'un entraînement par de l'eau seule ne suffit pas à extraire. Pour augmenter le taux d'extraction hors de réservoirs carbonés, il a notamment été proposé l'injection de fluides d'extraction comprenant des polymères associatifs conférant au fluide une viscosité élevée. De tels fluides peuvent être employés selon des techniques dites de balayage (techniques dites « *polymer flooding* » en anglais) pour entraîner plus efficacement qu'une simple composition aqueuse les hydrocarbures hors du réservoir. Plus spécifiquement, on peut employer des fluides d'extraction à base de polymères associatifs permettant d'induire dans le réservoir une modification de la perméabilité relative (« *relative permeability modification* » ou RPM en anglais), qui induit un déplacement préférentiel des hydrocarbures au détriment de l'eau. Les techniques de RPM consistent généralement à utiliser les polymères à des concentrations induisant non pas seulement une augmentation de viscosité, mais une gélification de zones non productives où seule de l'eau est présente.

L'injection de fluides d'extraction du type précités, fortement visqueux, au sein de réservoirs hydrocarbonés implique en général la mise en œuvre de pressions importantes qui, d'une part implique des dépenses énergétiques et d'autre part peuvent dégrader les polymères sous l'effet du cisaillement.

Un but de la présente invention est de fournir des fluides d'extraction à base de polymères viscosants qui présentent une efficacité similaire aux fluides connus, mais qui soient plus aisément injectables, en permettant entre autres de réduire l'énergie nécessaire à leur injection, et pour lesquels les phénomènes de dégradation des polymères viscosants sous cisaillement sont de préférence réduits voire nuls.

A cet effet, il est proposé selon la présente invention un nouveau type de fluide d'extraction, qui comprend, en milieu aqueux :
(i) des polymères associatifs qui sont intrinsèquement propres à augmenter la viscosité du milieu aqueux, voire à le gélifier ; et
(ii) au moins un tensioactif labile présent en une quantité suffisante pour réduire ou inhiber l'augmentation de la viscosité induit par lesdits polymères associatifs lors de l'injection et qui se dégrade après l'injection dans les conditions de température et de pH du réservoir hydrocarboné dans lequel il est introduit ce par quoi la viscosité du fluide augmente après injection.

Plus précisément, selon un premier aspect, la présente invention a pour objet un fluide d'extraction comprenant, en milieu aqueux :
- un polymère associatif comprenant un squelette de nature hydrophile et de 0,001% à 10% en mole de fonctions de nature hydrophobe induisant une augmentation de la viscosité du milieu aqueux et ne se dégradant pas dans des conditions de température et de pH d'un réservoir hydrocarboné ; et
- un tensioactif labile porteur d'une fonction clivable qui est une fonction ester, en une quantité suffisante pour réduire ou inhiber l'effet d'augmentation de la viscosité induit par ledit polymère associatif lors de l'injection et qui se dégrade après l'injection dans les conditions de température et de pH du réservoir hydrocarboné. Le polymère associatif est présent à hauteur de 0,1 à 3% en masse par rapport à la masse totale du fluide d'extraction.

Selon un autre aspect, l'invention concerne l'utilisation des fluides précités comme fluide d'extraction. Dans ce cadre, l'invention a notamment pour objet un procédé de récupération d'hydrocarbures dans un réservoir hydrocarboné, comprenant une étape où un fluide d'extraction du type précité est injecté au sein d'un réservoir hydrocarboné où les conditions de température et/ou de pH sont propres à lyser tout ou partie du tensioactif labile. Selon un mode de réalisation, le fluide d'extraction peut être employé en modification de perméabilité, à savoir pour effectuer une gélification des zones les moins productives du réservoir et ainsi limiter la production d'eau.

Par « polymère associatif », on entend, au sens de la présente description, un polymère propre à augmenter la viscosité d'un milieu aqueux par des associations impliquant des interactions hydrophobe-hydrophobe entre les polymères. De tels polymères sont également parfois désignés sous le nom de « polymères hydrosolubles hydrophobiquement associatifs » (PHA) ou bien encore « polymères amphiphiles ». Il s'agit en général de polymères comportant un squelette de nature hydrophile et incluant, le long des chaînes et/ou à tout ou partie des extrémités de celles-ci, de faibles quantités (de l'ordre de 0,001 % à 10% en mole, et généralement quelques pourcents molaires tout au plus) de fonctions de nature hydrophobes. Lorsque de tels polymères sont mis en milieu aqueux, ils forment, de façon connue en soi, des liens hydrophobes (les fonctions hydrophobes se regroupent entre elles pour diminuer l'énergie du système, de la même façon que se forme en milieu aqueux des micelles de tensioactif).

Par ailleurs, la notion de « tensioactif labile » (ou « *cleavable surfactant* » en anglais) désigne ici un tensioactif qui est propre à se lyser, typiquement en se clivant en deux molécules distinctes, dans des conditions de pH et de température où au moins une partie des polymères associatifs auquel il est associé dans la composition ne sont pas dégradés. Les tensioactif clivable employés selon l'invention sont des tensiaoctifs qui se dégradent après injection, dans des conditions où les polymères associatifs ne sont pas dégradés. Des tensioactifs labiles de ce type sont bien connus de la littérature. Pour plus de détails, on pourra notamment se reporter à "*Cleavable surfactants*" Alireza Tehrani- Bagha, Krister Holm.

L'emploi spécifique d'un tensioactif labile confère au fluide d'extraction selon l'invention les avantages des fluides d'extraction connus en s'affranchissant de leurs inconvénients. En effet, du fait de la présence de ce tensioactif labile, le fluide d'extraction présente, lorsqu'il est injecté, une viscosité réduite qui facilite son injection, et la viscosité est recouvrée au sein du réservoir hydrocarboné dans la zone où on souhaite effectuer l'extraction.

L'abaissement de la viscosité obtenu de par la présence du tensioactif labile permet de réduire sensiblement les phénomènes de perte de charge et, dans le cas où on utilise des polymères sensibles à la dégradation, une diminution de la dégradation des polymères sous cisaillement.

De plus, la nature des polymères associatifs présents dans les fluides d'extraction de la présente invention est très modulable.

En particulier, selon un mode de réalisation intéressant, les fluides d'extraction de l'invention peuvent avantageusement comprendre à titre de polymères associatifs des polymères amphiphiles de relativement bas poids moléculaire (par exemple inférieur à 1 000 000 g/mol, voire à 500 000 g/mol par exemple inférieur à 100 000 g/mol) qui permettent d'induire des viscosités élevées après lyse du tensioactif labile, et ce à partir de concentrations relativement faibles, et qui sont en outre moins sensibles à la dégradation sous cisaillement que des polymères de taille plus importante.

En pratique, tout polymère associatif tel que défini dans la revendication 1 peut être utilisé selon l'invention. A ce sujet, il est à noter qu'en plus des avantages précités, le tensioactif labile présent dans les compositions de l'invention permet d'améliorer l'hydratation des polymères en milieu aqueux, ce qui permet d'utiliser dans les compositions de l'invention n'importe quel type de polymère associatif, y compris ceux réputés les moins hydratables. L'invention ouvre ainsi la voie à une utilisation de nombreux polymères amphiphiles dans des liquides d'extraction.

Compte tenu de la large gamme de polymères et de tensioactifs utilisables dans le cadre de l'invention, la méthode d'extraction décrite ici est extrêmement modulable. En effectuant un choix adapté de polymère et de tensioactif, on peut fournir selon l'invention aussi bien des fluides d'extraction pour lesquels une viscosité élevée sera obtenue (recouvrée) au bout de quelques mètres seulement que des fluides pour lesquels la viscosité reste faible jusqu'à la zone d'extraction.

Il est possible de moduler finement le comportement du fluide d'extraction pour adapter l'évolution de sa viscosité le long de la zone d'injection. En fonction du polymère et du tensioactif utilisés, il est des compétences de l'homme du métier d'adapter les concentrations des deux composés pour obtenir le profil d'évolution de viscosité souhaité. Avant la lyse des tensioactifs labiles, les polymères associatifs et les tensioactifs interagissent selon un mécanisme connu, décrit notamment dans "Interactions between hydrophobically modified polymers and surfactants" B. Magny, I. Iliopoulos, R. Audebert, L. Piculell, B. Lindman Progress in Colloid & Polymer Science Volume 89, 1992, pp 118-121.

Les interactions entre polymères associatifs et tensioactifs varient de façon connue en soi en fonction de la teneur en tensioactif. Lorsqu'on ajoute une très faible quantité de tensioactifs, cette faible quantité de tensioactif densifie le nombre de liaisons hydrophobes, ce qui fait croître la viscosité. A faible teneur en tensioactif, la viscosité croît ainsi jusqu'à un maximum au fur et à mesure de l'ajout de tensioactif. Au-delà de la teneur limite en tensioactif pour laquelle on observe ce maximum, la tendance s'inverse et l'ajout de tensioactif fait au contraire décroître de plus en plus les interactions entre les polymères et donc la viscosité. Pour tout couple de tensioactif et de polymère, il y a une concentration minimale en tensioactif au-delà de laquelle on obtient une décroissance systématique de la viscosité, cette concentration minimale étant très aisée à déterminer.

Selon un mode de réalisation, le tensioactif et le polymère ainsi que leurs concentrations respectives sont choisis de façon à ce qu'une faible viscosité soit maintenue de la surface jusqu'à la zone où on souhaite effectuer l'extraction (RPM notamment) et la montée en viscosité due à la lyse du tensioactif intervient de préférence juste au niveau de la zone d'extraction.

En plus des avantages précités, les polymères associatifs employés dans les fluides d'extraction de l'invention présentent l'avantage de pouvoir être employés en présence de sels (la présence de sels améliore d'ailleurs en général leur caractère associatif), ce qui autorise l'emploi de l'eau immédiatement disponible dans l'environnement proche de la zone d'extraction sans avoir à se soucier de sa pureté ou de sa teneur en sels. Ainsi, en particulier, l'invention se prête bien à la formulation de fluides d'extraction à base d'eau de mer ou d'eau de production et plus généralement de toute eau pouvant contenir des sels (y compris à des teneurs élevées pouvant aller jusqu'à 25% en masse et/ou avec des duretés importantes pouvant aller jusqu'à des teneurs en Mg²⁺ et Ca²⁺ de l'ordre de 5000 ppm) : selon un mode particulier, le fluide de fracturation de l'invention comprend de l'eau de mer ou de l'eau de production à titre de milieu aqueux.

Différentes caractéristiques et modes de réalisation plus particuliers de l'invention vont maintenant être exposés plus en détails :

### les polymères associatifs :

Les polymères employés selon l'invention peuvent varier en une assez large mesure.

Ils peuvent par exemple être choisis parmi les polymères décrits dans US4529523, US4432881, US4814096, WO 85/03510, US4702319, US4709759, US4638865, US4780517, US4852652 ou US4861499.

Plus généralement, il peut s'agit de polymères associatifs à base d'un squelette hydrophile porteur de groupements hydrophobes du type obtenu par les voies de synthèse de type HASE (voie de synthèse directe) ou de type HEUR (post addition de groupes hydrophobe sur une chaîne hydrophile). Des exemples de synthèse de ce type sont notamment décrits dans Prog. Color Colorants Coat. Vol 4, pp. 71 -77 (201 1 ).

On peut par ailleurs utiliser des polymères associatifs issu de procédés dits de "polymérisation radicalaire micellaire" du type décrits dans US 4,432,881 ou bien encore dans Polymer, vol. 36 , N° 16, pp. 3197-321 1 (1996), auxquels on pourra se reporter pour plus de détails, par copolymérisation de monomères hydrophiles et de monomères hydrophobes au sein d'un milieu dispersant aqueux (typiquement de l'eau ou un mélange eau/alcool) qui comprend :
- les monomères hydrophiles à l'état solubilisé ou dispersé dans ledit milieu ; et
- les monomères hydrophobes au sein de micelles de tensioactif formées dans ledit milieu en y introduisant ce tensioactif à une concentration supérieure à sa concentration micellaire critique (cmc).

Selon un mode particulier, les monomères hydrophobes présents au sein de micelles de tensioactifs employés en polymérisation micellaire peuvent être des monomères qui, en eux-mêmes ont la propriété de former des micelles sans avoir besoin d'ajouter des tensioactifs additionnels (monomères dits «auto-micellisables» dans la suite de la description). Selon ce mode particulier, le tensioactif employé peut être le monomère hydrophobe auto-micellisable lui-même, employé sans autre tensioactif, bien que la présence d'un tel tensioactif additionnel ne soit pas exclue. Ainsi, au sens de la présente description, lorsqu'il est fait mention de monomères hydrophobes au sein de micelles de tensioactifs, cette notion englobe aussi bien (i) des monomères hydrophobes présent au sein de micelles de tensioactif autre que ces monomères que (ii) des monomères comprenant au moins une partie ou un bloc hydrophobe et formant par eux- mêmes les micelles en milieu aqueux. Les deux modes (i) et (ii) précités sont compatibles et peuvent coexister (monomères hydrophobes au sein de micelles formées par un autre monomère auto-micellisables par exemple, ou bien encore micelles comprenant une association de tensioactifs et de monomères auto-micellisables).

En polymérisation micellaire, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable. Selon un mode de réalisation intéressant, les polymères associatifs employés selon la présente invention sont des polymères obtenus selon un procédé de préparation qui comprend une étape (E) de polymérisation radicalaire micellaire dans laquelle on met en contact, au sein d'un milieu aqueux (M) :
- des monomères hydrophiles, solubilisés ou dispersés dans ledit milieu aqueux (M) ;
- des monomères hydrophobes sous la forme d'une solution micellaire, à savoir contenant, à l'état dispersé au sein du milieu (M), des micelles comprenant ces monomères hydrophobes (cet état dispersé pouvant notamment être obtenu à l'aide d'au moins un tensioactif);
- au moins un amorceur de polymérisation radicalaire, cet amorceur étant typiquement hydrosoluble ou hydrodispersible ; et
- au moins un agent de contrôle de polymérisation radicalaire.

Le milieu aqueux (M) employé dans l'étape (E) est un milieu comprenant de l'eau, de préférence à hauteur d'au moins 50% en masse, voire au moins 80%, par exemple au moins 90%, voire au moins 95%. Ce milieu aqueux peut éventuellement comprendre d'autres solvants que l'eau, par exemple un alcool miscible à l'eau. Ainsi, le milieu (M) peut être par exemple un mélange hydroalcoolique. Selon une variante possible, le milieu (M) peut comprendre d'autres solvants, de préférence en une concentration où ledit solvant est miscible à l'eau, ce qui peut notamment permettre de réduire la quantité de tensioactifs stabilisants employés. Ainsi, par exemple, le milieu (M) peut comprendre du pentanol, ou tout autre additif permettant de moduler le nombre d'agrégation des tensioactifs. De façon générale, il est préférable que le milieu (M) soit une phase continue d'eau et constituée d'un ou plusieurs solvants et/ou additifs miscibles entre eux et dans l'eau dans les concentrations où ils sont employés.

Par "*agent de contrôle de polymérisation radicalaire*", on entend, au sens de la présente description, un composé capable de rallonger le temps de vie des chaînes polymères en croissance dans une réaction de polymérisation et de conférer à la polymérisation un caractère vivant ou contrôlé. Cet agent de contrôle est typiquement un agent de transfert réversible tel que mis en œuvre dans les polymérisations radicalaires contrôlées désignés sous la terminologie RAFT ou MADIX, qui mettent typiquement en œuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/3 5177, WO 99/31 144, FR2794464 ou WO 02/26836.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. Un xanthate adapté est le Rhodixan A1 disponible auprès de la société Solvay. D'autres types d'agent de contrôle peuvent être envisagés (par exemple du type de ceux employé en CRP ou en ATRP).

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Selon une variante particulière, l'agent de contrôle de polymérisation radicalaire employé dans l'étape (E) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme agent de contrôle de la polymérisation et comme monomère dans l'étape (E), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E) peut avantageusement être un pré-polymère porteur d'un groupe thiocarbonylthio - S(C=S)-, par exemple d'un groupe xanthate -SC=S-O-, obtenu à l'issue d'une étape (E°) de polymérisation radicalaire contrôlée préalable à l'étape (E). Dans cette étape (E°), on peut typiquement mettre en contact des monomères hydrophiles, avantageusement identiques à ceux mis en œuvre dans l'étape (E) ; un amorceur de polymérisation radicalaire ; et un agent de contrôle porteur d'un groupe thiocarbonylthio -S(C=S)-, par exemple un xanthate.

La mise en œuvre de l'étape (E°) précité préalablement à l'étape (E) permet, schématiquement, d'hydrophiliser un grand nombre d'agent de contrôle porteurs de fonctions thiocarbonylthio (par exemple des xanthate, qui sont plutôt hydrophobes par nature), en les convertissant des pré-polymères solubles ou dispersibles dans le milieu (M) de l'étape (E). De préférence, un pré-polymère synthétisé dans l'étape (E°) possède une chaîne polymère courte, par exemple comprenant un enchaînement de moins de 50, voire moins de 25 unités monomères, par exemple entre 2 et 15.

De façon inattendue, il s'avère que les conditions de l'étape (E) permettent de combiner les avantages à la fois de la polymérisation radicalaire contrôlée et de la polymérisation micellaire. Dans ce cadre, les inventeurs ont en particulier maintenant mis en évidence que la présence des micelles dans le milieu de polymérisation n'affecte pas l'action des agents de contrôle, qui permettent de réaliser une polymérisation contrôlée des monomères présents au sein du milieu aqueux de façon similaire à une polymérisation radicalaire contrôlée effectuée en milieu homogène, ce qui permet de prévoir et de contrôler très aisément la masse molaire moyenne du polymère synthétisé (cette masse est d'autant plus élevées que la concentration initiale en agent de contrôle dans le milieu est faible, cette concentration dictant le nombre de chaînes polymères en croissance). Dans le même temps, la présence de l'agent de contrôle ne nuit pas non plus à l'effet intéressant observé en polymérisation, à savoir le contrôle précis de la taille des blocs hydrophobes.

En plus de ce contrôle de la polymérisation des monomères, non obtenu dans les procédés plus usuels de polymérisation micellaire, la mise en œuvre de l'étape (E) du procédé de l'invention permet en outre, de façon également totalement surprenante, d'accéder à des polymères de taille à la fois élevée et contrôlée, ce qui s'avère tout particulièrement inattendu au vu des tailles maximales qu'on sait obtenir aujourd'hui en employant des méthodes de polymérisation radicalaire contrôlée ou de polymérisation radicalaire micellaire en l'absence d'agents de contrôle.

Dans les conditions de l'étape (E), il s'avère possible de contrôler la masse molaire moyenne en nombre des polymères ce qui permet, entre autres, de réaliser des polymères de faibles masses.

Selon un mode de réalisation intéressant, le polymère associatif présent dans le fluide de fracturation de l'invention est synthétisé selon l'étape (E) précitée et a une masse comprise entre 50 000 et 10 000 000, de préférence, entre 750 000 et 5 000 000 g/mol, notamment entre 1 000 000 et 4 000 000 g/mol. Typiquement, de tels polymères peuvent être employés en concentration inférieure à leur concentration de recouvrement critique. En raison de leurs petites tailles, de tels polymères peuvent diffuser aux interfaces et participer à la modification des propriétés de ces interfaces ou surfaces.

Quelle que soit sa nature, le polymère associatif des fluides d'extraction selon l'invention est présent à hauteur de 0,1 % à 3%, de préférence entre 0,2% et 1,5%, de préférence entre 0,3% et 1 %,en masse par rapport à la masse totale du fluide d'extraction lorsque le fluide est destiné à être utilisé en modification de perméabilité relative.

### les tensioactifs labiles :

Les tensioactifs labiles employés dans le cadre de l'invention sont des tensioactifs qui présentent des groupes ayant une affinité pour les groupes hydrophobes présents sur les polymères associatifs et d'autre part des chaînes hydrophiles. Avantageusement, il s'agit de tensioactifs hydrosolubles.

Par ailleurs, il s'agit de composés porteurs d'une fonction clivable. Cette fonction clivable est avantageusement une fonction ester.

Selon un mode de réalisation, les tensioactifs labiles présent dans les fluides de fracturation de l'invention sont des tensioactifs non ioniques. Il peut également s'agir de tensioactifs ayant la structure de tensioactifs non ioniques, mais éventuellement porteur de groupe fonctionnalisés, éventuellement chargés, en extrémité de chaîne.

Selon une variante intéressante, ces tensioactifs labiles comprennent des esters d'acide gras éthoxylés, répondant à la formule R-COO-(CH₂-CH₂ -O-)ₙ-H, où R est une chaîne hydrocarbonée linéaire ou ramifiée, de préférence linéaire, typiquement un alkyle comportant de 4 à 22 atomes de carbone, par exemple de 5 à 18 ; et n est supérieur à 3, n allant par exemple de 4 à 50.

Un tensioactif bien adapté à l'invention est par exemple l'Alkamuls PSML20 (dit aussi polysorbate 20), de formule suivante : 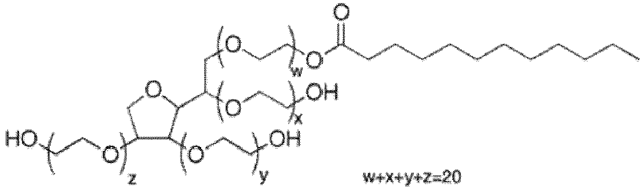 Ce composé est disponible auprès de la société Solvay.

### autres composés éventuellement présents dans le fluide d'extraction de l'invention :

### • agent(s) de contrôle du pH

En particulier lorsque les tensioactif labiles sont des esters, le fluide d'extraction peut comprendre des agents de régulation ou de contrôle du pH, notamment des tampons, des bases ou des acides.

En fonction du profil d'évolution de viscosité recherché, on se placera préférablement dans une gamme de pH voisin de la neutralité (entre 6 et 8, plus préférentiellement entre 6,5 et 7,5 si on souhaite que la viscosité augmente lentement.

A l'inverse, on se placera dans des conditions acides (par exemple inférieures à 4, voire à 3) ou basique (supérieures à 9, voire à 10) si on souhaite une augmentation plus rapide de la viscosité.

### Application spécifique de l'invention pour le contrôle de la perméabilité relative :

Dans ce type d'application (RPM), les interactions entre les polymères associatifs, qui forment un gel en milieu riche en eau, sont perturbées voire rompues en présence de quantités importantes d'hydrocarbures.

De ce fait, lors de la mise en œuvre de l'invention, lorsqu'un fluide d'extraction est employé pour gélifier les zones les moins productives du réservoir, ces zones gélifiées ne sont pas complètement obturées : elles immobilisent certes l'eau en favorisant le déplacement des fluides dans d'autres zones du réservoir, mais elles ne constituent pas une barrière infranchissable pour les hydrocarbures.

Au contraire, les zones gélifiées présentent une perméabilité à l'huile non réduite par l'emploi des polymères associatifs.

En d'autres termes, l'invention permet d'assurer une sélectivité au sein du réservoir en favorisant le passage de l'huile au détriment de celui de l'eau.
L'invention va maintenant être illustrée par l'exemple donné ci-après.

### EXEMPLE

### Synthèse d'un polymère associatif (poly acrylamide/AMPS/LMA 2000 000 g/mol)

Dans un ballon de 500 mL, on a introduit, à température ambiante (20°C), 29,3g d'une solution de SDS à 30%, 89,03g d'eau distillée, 1,66g de méthacrylamide de lauryle (monomère LMA). Le mélange a été porté sous agitation à l'aide d'un barreau aimanté pendant 6h, jusqu'à obtention d'un solution micellaire limpide.

Dans un ballon de 250 mL, on a introduit, à température ambiante (20°C), 32,9g de la solution micellaire ainsi préparée, 7,53g d'eau, 40,7g d'acrylamide (solution aqueuse a 50% en masse), 32g AMPS (solution aqueuse a 51 % en masse), 0,454 g de Rhodixan A1 (solution éthanolique à 1,0% en masse) et 6,00g de persulfate d'ammonium (solution aqueuse a 0,67% en masse).

Le mélange a été dégazé par bullage d'azote pendant 20 minutes.

On a ajouté au milieu, en une fois, 1 ,5g du formaldéhyde sulfoxylate de sodium, sous forme de solution aqueuse à 0,13 % en masse.

Le mélange a été dégazé par bullage d'azote pendant 15 minutes.

On a alors laissé la réaction de polymérisation se dérouler sous agitation pendant 16 heures à température ambiante (20°C).

### réduction de la viscosité par ajout de tensioactif labile

Le polymère préparé précédemment a été mis en solution à 0,5% en masse en polymère dans une solution aqueuse de NaCI à 15% en masse en présence de tensioactif labile Alkamuls PSML20 à différente concentrations.

Pour chacune des concentrations, la viscosité du mélange a été mesurée à 80°C, à l'aide d'un rhéomètre AR2000 (TA Instrument, Surrey, Grande-Bretagne), équipé d'une géométrie de type Couette. Les résultats sont reportés dans le tableau ci-après :

| concentration | Viscosité |
|---|---|
| (ppm) | à 1 s⁻¹ (mPa·s) |
| 0 | 3430 |
| 50 | 1140 |
| 100 | 360 |
| 250 | 168 |
| 500 | 48 |
| 1000 | 10 |

La diminution de viscosité par ajout de tensioactif labile est ici mise en évidence au-delà de 500ppm.

### hydrolyse du tensioactif labile - effet sur la viscosité

Le polymère de l'exemple 1 a été mis en solution à 0.5%wt dans NaCl 15% en présence de 0.5% Alkamuls PSML20. De la soude est ajoutée pour obtenir une concentration de 83mmol/L. La viscosité de la solution ainsi obtenue est de 10cP à 25°C (à 1 s⁻¹ ).

La solution a été placée en étuve à 80°C pendant 16 h. A l'issue de ce traitement, la viscosité de la solution a été mesurée égale à 4200cP à 1 s⁻¹ (contre 3600cP pour une solution de polymère sans tensioactif obtenue après hydratation par chauffage pendant 4 h à 80°C).

## Revendications

1. - Fluide d'extraction comprenant, en milieu aqueux :
- un polymère associatif comprenant un squelette de nature hydrophile et de 0,001% à 10% en mole de fonctions de nature hydrophobe induisant une augmentation de la viscosité du milieu aqueux et ne se dégradant pas dans des conditions de température et de pH d'un réservoir hydrocarboné; et
- un tensioactif labile porteur d'une fonction clivable qui est une fonction ester, en une quantité suffisante pour réduire ou inhiber l'effet d'augmentation de la viscosité induit par ledit polymère associatif lors de l'injection et qui se dégrade après l'injection dans les conditions de température et de pH du réservoir hydrocarboné,
dans lequel le polymère associatif est présent à hauteur de 0,1 à 3% en masse par rapport à la masse totale du fluide d'extraction.

2. Fluide d'extraction selon la revendication 1, dans lequel le polymère associatif est présent à hauteur de 0,2% et 1,5% en masse par rapport à la masse totale du fluide d'extraction.

3. - Fluide d'extraction selon la revendication 1 ou la revendication 2, dans lequel le polymère associatif est obtenu selon un procédé de préparation qui comprend une étape (E) de polymérisation radicalaire micellaire dans laquelle on met en contact, au sein d'un milieu aqueux (M) :
- au moins un monomère hydrophile, solubilisé ou dispersé dans ledit milieu aqueux (M) ;
- au moins un monomère hydrophobe sous la forme d'une solution micellaire contenant, à l'état dispersé au sein du milieu (M), des micelles comprenant ledit au moins un monomère hydrophobe, cet état dispersé étant optionnellement obtenu à l'aide d'au moins un tensioactif ;
- au moins un amorceur de polymérisation radicalaire hydrosoluble ou hydrodispersible ; et
- au moins un agent de contrôle de polymérisation radicalaire.

4. - Fluide d'extraction selon la revendication 3, dans lequel l'agent de contrôle de polymérisation radicalaire employé dans l'étape (E) est un composé qui comprend un groupe thiocarbonylthio -S(C=S)-.

5. - Fluide d'extraction selon la revendication 4, dans lequel l'agent de contrôle de polymérisation employé dans l'étape (E) est un xanthate.

6. - Fluide d'extraction selon la revendication 1, dans lequel le tensioactif labile comprend un ester d'acide gras éthoxylé, de préférence de formule R-COO-(CH₂-CH₂-O-)ₙ-H, où R est une chaîne hydrocarbonée linéaire ou ramifiée et n est supérieur à 3.

7. - Procédé de récupération d'hydrocarbures dans un réservoir hydrocarboné, le procédé comprenant :
- une étape d'injection d'un fluide d'extraction selon l'une des revendications 1 à 6 au sein d'un réservoir hydrocarboné où les conditions de température et/ou de pH sont propres à lyser tout ou partie du tensioactif labile.

8. - Procédé selon la revendication 7, dans lequel l'étape d'injection du fluide d'extraction est une étape de modification de la perméabilité relative.

9. Utilisation du fluide d'extraction selon l'une des revendications 1 à 6 pour le contrôle de la perméabilité relative.

## Patentansprüche

1. Extraktionsfluid, umfassend in wässrigem Medium:
- ein assoziatives Polymer, umfassend ein Gerüst hydrophiler Natur und 0,001 bis 10 Mol-% Funktionen hydrophober Natur, das eine Erhöhung der Viskosität des wässrigen Mediums bewirkt und unter den Temperatur- und pH-Bedingungen eines Kohlenwasserstoffreservoirs nicht abgebaut wird; und
- ein labiles Tensid mit einer spaltbaren Funktion, bei der es sich um eine Esterfunktion handelt, in einer zur Verringerung oder Inhibierung des bei der Injektion durch das assoziative Polymer bewirkten Effekts der Erhöhung der Viskosität, wobei das Tensid nach der Injektion unter den Temperatur- und pH-Bedingungen des Kohlenwasserstoffreservoirs abgebaut wird,
wobei das assoziative Polymer in einer Menge von 0,1 bis 3 Massen-%, bezogen auf die Gesamtmasse des Extraktionsfluids, vorliegt.

2. Extraktionsfluid nach Anspruch 1, wobei das assoziative Polymer in einer Menge von 0,2 bis 1,5 Massen-%, bezogen auf die Gesamtmasse des Extraktionsfluids, vorliegt.

3. Extraktionsfluid nach Anspruch 1 oder Anspruch 2, wobei das assoziative Polymer durch ein Herstellungsverfahren erhalten wird, das einen Schritt (E) der mizellaren Radikalpolymerisation umfasst, bei dem man in einem wässrigen Medium (M):
- mindestens ein in dem wässrigen Medium (M) gelöstes oder dispergiertes hydrophiles Monomer;
- mindestens ein hydrophobes Monomer in Form einer mizellaren Lösung, die Mizellen, die mindestens ein hydrophobes Monomer umfassen, in dem Medium (M) dispergiert enthält, wobei dieser dispergierte Zustand gegebenenfalls mit Hilfe mindestens eines Tensids erhalten wird;
- mindestens einen wasserlöslichen oder wasserdispergierbaren Radikalpolymerisationsinitiator und
- mindestens ein Mittel zur Steuerung der Radikalpolymerisation
in Kontakt bringt.

4. Extraktionsfluid nach Anspruch 3, wobei es sich bei dem in Schritt (E) eingesetzten Mittel zur Steuerung der Radikalpolymerisation um eine Verbindung mit einer Thiocarbonylthiogruppe -S(C=S)- handelt.

5. Extraktionsfluid nach Anspruch 4, wobei es sich bei dem in Schritt (E) eingesetzten Mittel zur Steuerung der Radikalpolymerisation um ein Xanthat handelt.

6. Extraktionsfluid nach Anspruch 1, wobei das labile Tensid einen ethoxylierten Fettsäureester, vorzugsweise der Formel R-COO-(CH₂-CH₂-O)ₙ-H, umfasst, wobei R für eine lineare oder verzweigte Kette steht und n größer als 3 ist.

7. Verfahren zur Gewinnung von Kohlenwasserstoffen in einem Kohlenwasserstoffreservoir, wobei das Verfahren Folgendes umfasst:
- einen Schritt der Injektion eines Extraktionsfluids nach einem der Ansprüche 1 bis 6 in ein Kohlenwasserstoffreservoir, wobei die Temperatur- und/oder pH-Bedingungen für die vollständige oder teilweise Lyse des labilen Tensids geeignet sind.

8. Verfahren nach Anspruch 7, wobei es sich bei dem Schritt der Injektion des Extraktionsfluids um einen Schritt der Modifizierung der relativen Permeabilität handelt.

9. Verwendung des Extraktionsfluids nach einem der Ansprüche 1 bis 6 zur Steuerung der relativen Permeabilität.

## Claims

1. Extraction fluid comprising, in an aqueous medium:
- an associative polymer comprising a backbone of hydrophilic nature and from 0.001 to 10 mol% of functional groups of hydrophobic nature bringing about an increase in the viscosity of the aqueous medium and not degrading under temperature and pH conditions of a hydrocarbon reservoir; and
- a labile surfactant carrying a cleavable functional group which is an ester functional group, in an amount sufficient to reduce or inhibit the effect of increasing the viscosity brought about by said associative polymer during the injection and which does not degrade after the injection under the temperature and pH conditions of the hydrocarbon reservoir,
wherein the associative polymer is present at a content of 0.1 to 3 wt% with respect to the total weight of the extraction fluid.

2. Extraction fluid according to claim 1, wherein the associative polymer is present at a content of 0.2 to 1.5 wt%, with respect to the total weight of the extraction fluid.

3. Extraction fluid according to claim 1 or claim 2, wherein the associative polymer is obtained according to a preparation process which comprises a step (E) of radical micellar polymerisation wherein the following are brought into contact, within an aqueous medium (M):
- at least one hydrophilic monomer, dissolved or dispersed in said aqueous medium (M);
- at least one hydrophilic monomer in the form of a micellar solution containing, in the dispersed state within the medium (M), micelles comprising said at least one hydrophobic monomer, this dispersed state being optionally obtained using at least one surfactant;
- at least one water-soluble or water-dispersible radical polymerisation initiator; and
- at least one radical polymerisation control agent.

4. Extraction fluid according to claim 3, wherein the radical polymerisation control agent employed in step (E) is a compound which comprises a thiocarbonylthio -S(C=S)- group.

5. Extraction fluid according to claim 4, wherein the polymerisation control agent employed in step (E) is a xanthate.

6. Extraction fluid according to claim 1, wherein the labile surfactant comprises an ethoxylated fatty acid ester, preferably of formula R-COO-(CH₂-CH₂-O-)ₙ-H, wherein R is a linear or branched hydrocarbon chain and n is greater than 3.

7. Process for recovery of hydrocarbons in a hydrocarbon reservoir, the process comprising:
- a step of injection of an extraction fluid according to any one of claims 1 to 6 within a hydrocarbon reservoir where the temperature and/or pH conditions are suitable for lysing all or part of the labile surfactant.

8. Process according to claim 7, wherein the step of injection of the extraction fluid is a step of modification of the relative permeability.

9. Use of the extraction fluid according to any one of claims 1 to 6 for controlling the relative permeability.
